# EUROPÄISCHE PATENTSCHRIFT

(11) **EP 2 707 203 B1**
(45) Veröffentlichungstag und Bekanntmachung des Hinweises auf die Patenterteilung: **02.09.2015**
(21) Anmeldenummer: 12706596.9
(22) Anmeldetag: 01.03.2012
(51) Int. Cl.: B29D 30/60, B29D 30/16

(54) **VORRICHTUNG MIT EINEM SINGLE-ROLL-ROLLER-DIE-SYSTEM**
DEVICE HAVING A SINGLE ROLL ROLLER DIE SYSTEM
DISPOSITIF COMPRENANT UN SYSTEME TETE-ROULEAU

(30) Priorität: 12.05.2011 DE 102011050301
(43) Veröffentlichungstag der Anmeldung: 19.03.2014
(73) Patentinhaber: Continental Reifen Deutschland GmbH, 30165 Hannover (DE)
(72) Erfinder: GEFFERT, Ulrich, 31848 Bad Münder (DE); WILKE, Andreas, 30659 Hannover (DE); REINHARDT, Thomas, 30890 Barsinghausen (DE); STEINER, Frank, 30451 Hannover (DE); ELSEN, Patrick, L-5312 Contern (LU); RENNMANN, Tim, 30177 Hannover (DE)
(74) Vertreter: Finger, Karsten
(86) Internationale Anmeldenummer: PCT/EP2012/053499
(87) Internationale Veröffentlichungsnummer: WO 2012/152460

(56) Entgegenhaltungen:
- EP-A1- 2 055 460
- DE-A1- 3 448 026

## Beschreibung

Die Erfindung betrifft eine Vorrichtung mit einem Single-Roll-Roller-Die-System zum Herstellen von aus elastomerem Material bestehenden Komponenten eines Fahrzeugreifens durch Applizieren eines unvulkanisierten Kautschukmischungsstreifens auf einen auf einer Aufbautrommel positionierten, bombierten Reifenrohling, mit einer Schablone, welche den entsprechend profilierten Kautschukmischungsstreifen auf eine erste rotierende Rolle übergibt.

Mit Single-Roll-Roller-Die-Vorrichtungen lassen sich profilierte Kautschukbahnen oder profilierte Kautschukmischungsstreifen von hoher Qualität in unterschiedlicher Breite und Dicke herstellen, beispielsweise Seitenwandstreifen für Fahrzeugreifen, Felgenhornstreifen, Laufstreifen, Apexstreifen, Innerliner und dergleichen. Eine in einem Extruder plastifizierte Kautschukmischung wird durch einen am Extruder angeflanschten Einwalzenkopf ausgeformt, welcher aus Teilen besteht, die gemeinsam einen Ausformspalt bilden, beispielsweise einem temperierten Kopf, einer ebenfalls temperierten Rolle und einer auswechselbaren Spritzleiste, welche an einem schwenkbaren Kopfoberteil angebracht ist. Die Kautschukmischung wird unter niedrigem Druck, demnach ohne zusätzliche Temperaturbelastung, in den formgebenden Spalt gegeben.

Aus der US 7,175,726 B2 ist eine Vorrichtung bekannt, welche mittels eines Extruders, einer Zahnradpumpe und einer Spritzleiste einen Kautschukmischungsstreifen erzeugt, welcher über eine Druckrolle auf einer Reifenaufbautrommel, die in Drehbewegung versetzt ist, aufgebracht wird. Die Vorrichtung ist in drei unterschiedliche Richtungen verfahrbar, um in variable Aufbringpositionen für den Kautschukmischungsstreifen gebracht werden zu können. Aus der EP 1 509 386 B1 ist eine Vorrichtung zur Herstellung von aus elastomerem Material bestehenden Komponenten eines Fahrzeugreifens bekannt, welche ein Abgabeelement für das elastomere Material aufweist, welches eine Strangpresse umfasst, die mit wenigstens einer Extruderschnecke versehen ist, der funktionsmäßig wenigstens eine Zahnradpumpe zugeordnet ist. Der Strangpresse ist ferner funktionsmäßig eine Vorrichtung zum Signalisieren des Vorhandenseins des elastomeren Materials zugeordnet, welches aus der Strangpresse kommt, um die Drehbewegung einer Reifenaufbautrommel zu koordinieren. Eine weitere Vorrichtung zum Auflegen eines nicht vulkanisierten Kautschukmischungsbandes für einen Reifenbauteil auf einer rotierenden Aufbautrommel ist aus der EP 0 968 814 B1 bekannt. Diese Vorrichtung verwendet ein Roller-Die-System, welches ein Paar Rollen aufweist, die zwischen sich einen Spalt definieren, der als Roller-Die dient. Das Rollenpaar ist in der Nähe der Oberfläche des radial äußeren Abschnittes der Aufbautrommel angeordnet, sodass das Kautschukmaterial von der Roller-Die direkt zur drehenden Aufbautrommel gelangt. Die eine Rolle ist eine Führungsrolle, die das Kautschukmaterial auf den radial äußeren Abschnitt der rotierenden Aufbautrommel führt.

Der Erfindung liegt die Aufgabe zugrunde mit einer Vorrichtung der eingangs genannten Art, welche ein Single-Roll-Roller-Die-System aufweist, auch sehr schmale und sehr dünne Streifen, wie sie beispielsweise zum Strip Winding von Laufstreifen verwendet werden, mit hoher Geschwindigkeit auf den Reifenrohling applizieren zu können.

Gelöst wird die gestellte Aufgabe erfindungsgemäß dadurch, dass eine zweite rotierende Rolle vorgesehen ist, welche mit der ersten Rolle einen schmalen Spalt einschließt, durch welchen der Kautschukmischungsstreifen geführt wird, und welche eine Breite aufweist, die im Wesentlichen der Breite des Kautschukmischungsstreifens entspricht bzw. diese nur geringfügig übersteigt, wobei die zweite Rolle den Kautschukmischungsstreifen auf den bombierten Reifenrohling appliziert.

Durch die Erfindung können mit einer Single-Roll-Roller-Die-Vorrichtung auf prozesssichere Weise erzeugte, dünne und schmale Kautschukmischungsstreifen mit hoher Geschwindigkeit auf den Reifenrohling übertragen und nach dem Strip Winding Verfahren spiralig aufgewickelt werden.

Eine exakte Übergabe des Kautschukmischungsstreifens auf den bombierten Reifenrohling sowie eine exakte Positionierung der Vorrichtung gegenüber dem Reifenrohling während des Applizierens des Kautschukmischungsstreifens wird dadurch unterstützt, dass die beiden Rollen derart zueinander angeordnet sind, dass der Kautschukmischungsstreifen jeweils im Wesentlichen über die Hälfte des Umfanges der Rollen verläuft.

Um die erfindungsgemäße Vorrichtung in unterschiedliche Positionen gegenüber dem Reifenrohling positionieren zu können, ist es von Vorteil, wenn die Vorrichtung parallel zur Achse der Aufbautrommel sowie in vertikaler Richtung, insbesondere jeweils linear, verfahrbar ist und ferner zumindest in zwei Richtungen, zu jeder Seite der Aufbautrommel jeweils um bis zu 90°, schwenkbar angeordnet ist.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Seitenansicht einer Vorrichtung zum Erzeugen und Aufbringen eines geformten Streifens aus einer Kautschukmischung auf einen Reifenrohling,
Fig. 2 eine Frontansicht der Vorrichtung gemäß Fig. 1 in einer relativ zum Reifenrohling zentrierten Position,
Fig. 3 eine zu Fig. 2 analoge Darstellung, jedoch in einer gegenüber Fig. 2 seitlich versetzten Position und
Fig. 4 eine Frontansicht der Vorrichtung gemäß Fig. 2 in zwei gegenüber Fig. 1 verschwenkten Positionen.

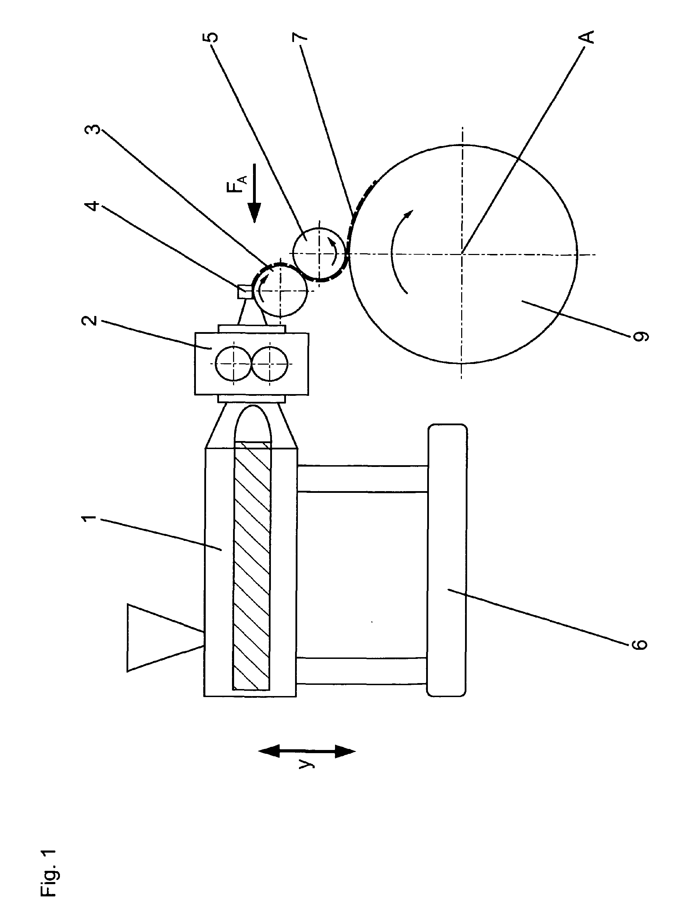

Wie Fig. 1 zeigt umfasst die als Single-Roll-Roller-Die ausgeführte Vorrichtung eine Plattform 6, auf welcher ein Extruder 1 mit einer Zahnradpumpe 2, einer Schablone 4 (Spritzleiste) und einer Rolle 3 angeordnet ist. Es ist bekannt, Single-Roll-Roller-Dies in der Kautschukverarbeitung, insbesondere für die Herstellung von Halbfabrikaten bei der Fahrzeugluftreifenfertigung, einzusetzen. Mit einer derartigen Vorrichtung lassen sich beliebig profilierte Kautschukmischungsbahnen oder Kautschukmischungsstreifen in hoher Qualität und in der gewünschten Breite und Dicke herstellen, gemäß dem Stand der Technik beispielsweise Kautschukmischungsstreifen zum Ummanteln von Gürtellagen von Fahrzeugluftreifen. Die im Extruder 1 plastifizierte Kautschukmischung wird über die Zahnradpumpe 2 unter niedrigem Druck in den formgebenden Spalt der Schablone 4 abgegeben. Die über einen separaten Antrieb in Rotationsbewegung versetzbare und temperierbare Rolle 3 ist gegenüber der Schablone 4 verstellbar. Durch ein entsprechendes Abstimmen der Rollentemperatur und der Umfangsgeschwindigkeit der Rolle 3 mit dem Extruderaustoß und der Abzugsgeschwindigkeit lassen sich die Kautschukmischungsstreifen mit hoher Genauigkeit bei geringer Materialquellung herstellen.

Die Rolle 3 weist eine Breite auf, die wesentlich größer ist als die Breite des hergestellten und in Fig. 1 angedeuteten Kautschukmischungsstreifens 7. Der von der Rolle 3 mitgenommene Kautschukmischungsstreifen 7 wird auf eine zweite, schmalere Rolle 5 übertragen, die den Mischungsstreifen 7 auf einen bombierten Reifenrohling 8, welcher auf einer rotierbaren Aufbautrommel 9 positioniert ist, appliziert. Die über einen separaten Antrieb entgegen der Rotationsrichtung der Rolle 3 in Rotation versetzbare Rolle 5 weist eine Breite auf, die im Wesentlichen der Breite des hergestellten Kautschukmischungsstreifens 7 entspricht bzw. nur geringfügig breiter ist als dieser. Der Außendurchmesser der Rolle 5 entspricht insbesondere dem Außendurchmesser der Rolle 3, sodass die Rotationsgeschwindigkeiten der Rollen 3 und 5 übereinstimmen. Der von der Rolle 3 mitgenommene Kautschukmischungsstreifen 7 durchtritt einen schmalen, der Dicke des Kautschukmischungsstreifen 7 angepassten Spalt zwischen den beiden Rollen 3 und 5 und wird derart von der Rolle 3 auf die Rolle 5 übergeben. Die Spaltbreite ist etwas geringer als die Dicke des Kautschukmischungsstreifens 7. Die Rotationsrichtungen der beiden Rollen 3 und 5 sind in Fig. 1 durch Pfeile gekennzeichnet, ein weiterer Pfeil kennzeichnet die Rotationsrichtung des Reifenrohlings 8, welche mit der Rotationsrichtung der Rolle 3 übereinstimmt. Die Rolle 5 ist gegenüber der Rolle 3 derart positioniert, dass der Kautschukmischungsstreifen 7 während seines Transportes über die beiden Rollen 3 und 5 jeweils etwa mit der Hälfte des Umfanges der Rollen 3 und 5 in Kontakt kommt.

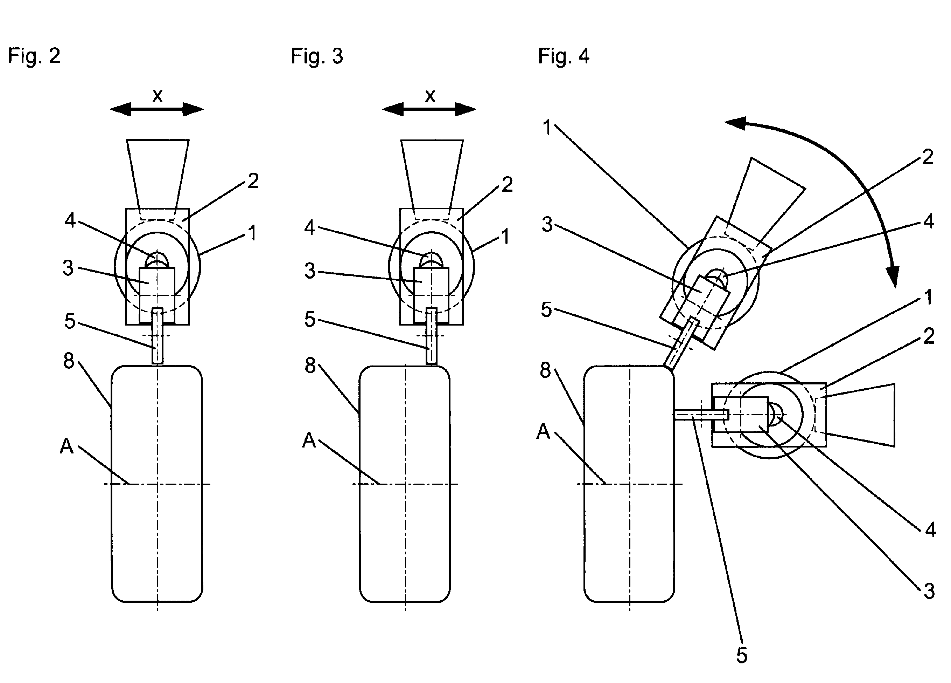

In Fig. 2 bis Fig. 4 zeigen Frontansichten der Vorrichtung in Richtung des Pfeiles F_{A} der Fig. 1. Zu den dargestellten Bestandteilen der Vorrichtung gehören die Zahnradpumpe 2, die Schablone 4 und die beiden Rollen 3 und 5. Die Plattform 6 ist gemeinsam mit der Vorrichtung derart verfahrbar angeordnet, dass die Vorrichtung linear in y-Richtung - in vertikaler Richtung gemäß dem Doppelpfeil in Fig. 1 - sowie in x-Richtung - parallel zur Rotationachse A des Reifenrohlings 8 und gemäß dem Doppelpfeil x in Fig. 2 und Fig. 3 - verfahrbar ist. Fig. 2 zeigt die Vorrichtung in ihrer gegenüber dem Reifenrohling 8 mittigen Position, Fig. 3 in einer in x-Richtung versetzten Position, wie sie beispielsweise auftritt, während ein Laufstreifen durch spiraliges Wickeln eines Kautschukmischungsstreifens 7 gebildet wird. Fig. 4 zeigt eine weitere Möglichkeit der Verfahrbarkeit der Vorrichtung durch beidseitiges Verschwenken um jeweils 90° in Positionen seitlich der Aufbautrommel 9, wobei in Fig. 4 eine Zwischenposition und eine der um 90° verschwenkten Positionen dargestellt sind. Diese Maßnahmen gestatten es, die Vorrichtung auch in Positionen seitlich der Aufbautrommel 9 und des Reifenrohlings 8 zu bringen, um derart beispielsweise einen Seitenwandgummi aus einem Kautschukmischungsstreifen durch spiralförmiges Auftragen applizieren zu können.

Zur Verfahrbarkeit der Vorrichtung in x- und y-Richtung können an sich bekannte Linearantriebe verwendet werden. Die Schwenkbewegungen können durch eine Anordnung der Vorrichtung auf einem Schwenktisch durchgeführt werden. Die Bewegbarkeit der Vorrichtung hat jedenfalls sicherzustellen, dass die erwünschten Auflagepositionen am Reifenrohling bzw. der Aufbautrommel 9 exakt angefahren werden können. Über eine entsprechende Software (CNC-Programm) wird in Abhängigkeit vom Spulmuster die Vorrichtung wie erforderlich in den zur Verfügung stehenden Richtungen und synchron zur Rohlingsrotation bewegt.

Mit der Vorrichtung gemäß der Erfindung lassen sich verschiedene Reifenbauteile auf einem bombierten Reifenrohling applizieren, wie beispielsweise Kernprofile, Felgenschutzprofile, Seitenwände, Laufstreifen (Cap, Base) und dergleichen.

### Bezugszeichenliste

1 .................... Extruder
2 .................... Zahnradpumpe
3 .................... Rolle
4 .................... Schablone
5 .................... Rolle
6 .................... Plattform
7 .................... Kautschukmischungsstreifen
8 .................... Reifenrohling
9 .................... Aufbautrommel
A..................... Achse

## Patentansprüche

1. Vorrichtung mit einem Single-Roll-Roller-Die-System zum Herstellen von aus elastomerem Material bestehenden Komponenten eines Fahrzeugreifens durch Applizieren eines unvulkanisierten Kautschukmischungsstreifens (7) auf einen auf einer Aufbautrommel (9) positionierten, bombierten Reifenrohling (8), mit einer Schablone (4), welche den entsprechend profilierten Kautschukmischungsstreifen (7) auf eine erste rotierende Rolle (3) übergibt,
**dadurch gekennzeichnet,**
**dass** eine zweite rotierende Rolle (5) vorgesehen ist, welche mit der ersten Rolle (3) einen Spalt einschließt, durch welchen der Kautschukmischungsstreifen (7) geführt wird, und welche eine Breite aufweist, die im Wesentlichen der Breite des Kautschukmischungsstreifens (7) entspricht bzw. diese nur geringfügig übersteigt, wobei die zweite Rolle (5) den Kautschukmischungsstreifen (7) auf den bombierten Reifenrohling (8) appliziert.

2. Vorrichtung nach Anspruch 1, **dadurch gekennzeichnet, dass** die beiden Rollen (3, 5) derart positioniert sind, dass der Kautschukmischungsstreifen (7) jeweils im Wesentlichen über die Hälfte des Umfanges der Rollen (3, 5) verläuft.

3. Vorrichtung nach Anspruch 1, **dadurch gekennzeichnet, dass** sie parallel zur Achse (A) der Aufbautrommel (9) und in vertikaler Richtung, insbesondere linear, verfahrbar und zumindest in zwei Richtungen, zu jeder Seite der Aufbautrommel (9) jeweils um bis zu 90°, schwenkbar angeordnet ist.

## Claims

1. Device having a single roll roller die system for producing components made of elastomeric material of a vehicle tyre by applying an unvulcanized rubber mixture strip (7) to a shaped tyre blank (8) positioned on a building drum (9), having a template (4) that transfers the correspondingly profiled rubber mixture strip (7) to a first rotating roller (3),
**characterized**
**in that** a second rotating roller (5) is provided, forming with the first roller (3) a gap through which the rubber mixture strip (7) is guided, and having a width that substantially corresponds to the width of the rubber mixture strip (7), or exceeds it only slightly, wherein the second roller (5) applies the rubber mixture strip (7) to the shaped tyre blank (8).

2. Device according to Claim 1, **characterized in that** the two rollers (3, 5) are positioned in such a way that the rubber mixture strip (7) in each case extends substantially over half the circumference of the rollers (3, 5).

3. Device according to Claim 1, **characterized in that** it is arranged movably parallel to the axis (A) of the building drum (9) and in the vertical direction, in particular linearly, and pivotably at least in two directions, to each side of the building drum (9), in each case by up to 90°.

## Revendications

1. Dispositif comprenant un système d'extrusion à rouleau à roulement unique pour la fabrication de composants d'un pneumatique pour véhicule constitués de matériau élastomère par application d'une bande de mélange de caoutchouc non vulcanisé (7) sur une ébauche de pneumatique bombée (8) positionnée sur un tambour de confection (9), comprenant un gabarit (4) qui transfère la bande de mélange de caoutchouc profilée de manière correspondante (7) sur un premier rouleau rotatif (3),
**caractérisé en ce**
**qu'**un deuxième rouleau rotatif (5) est prévu, lequel forme avec le premier rouleau (3) une fente par laquelle la bande de mélange de caoutchouc (7) est guidée et qui présente une largeur qui correspond essentiellement à la largeur de la bande de mélange de caoutchouc (7) ou qui n'est que légèrement supérieure à celle-ci, le deuxième rouleau (5) appliquant la bande de mélange de caoutchouc (7) sur l'ébauche de pneumatique bombée (8).

2. Dispositif selon la revendication 1, **caractérisé en ce que** les deux rouleaux (3, 5) sont positionnés de telle sorte que la bande de mélange de caoutchouc (7) s'étende à chaque fois essentiellement sur la moitié de la périphérie des rouleaux (3, 5).

3. Dispositif selon la revendication 1, **caractérisé en ce qu'**il est disposé de manière à pouvoir être déplacé parallèlement à l'axe (A) du tambour de confection (9) et dans la direction verticale, notamment de manière linéaire, et **en ce qu'**il est disposé de manière à pouvoir pivoter au moins dans deux directions, à chaque fois de jusqu'à 90°, de chaque côté du tambour de confection (9).
